# EUROPEAN PATENT APPLICATION

(11) **EP 4 745 211 A1**
(43) Date of publication of application: **20.05.2026**
(21) Application number: 24306902.8
(22) Date of filing: 14.11.2024
(51) Int. Cl.: C09K 8/035, C09K 8/528

(54) **POLYMER-POLYMER COMPLEX, PREPARATION AND USE AS A SCALE INHIBITOR**

(71) Applicant: TotalEnergies OneTech, 92400 Courbevoie (FR); University of Leeds, Leeds, Yorkshire LS2 9JT (GB)
(72) Inventor: BARAKA-LOKMANE, Salima, 64000 PAU (FR); ORDONEZ VARELA, John Richard, 64018 PAU CEDEX (FR); HAYATGHEIB, Yasmin, LEEDS, LS2 9JT (GB); BARKER, Richard, LEEDS, LS2 9JT (GB); TALEB, Wassim, LEEDS, LS2 9JT (GB)
(74) Representative: Plasseraud IP

(57) **Abstract**

This disclosure relates to a polymer complex, its preparation and its use as a scale inhibitor. In particular, the present disclosure relates to a polymer-polymer complex comprising (i) a copolymer comprising styrene sulfonic acid units and maleic acid units, and (ii) a polyaniline. This polymer-polymer complex is useful as a scale inhibitor, for sulphide scale and common scales like CaCO₃ and BaSO₄ and can therefore be used in the production of oil and gas.

## Description

### Technical field

This disclosure relates to a polymer-polymer complex, its preparation and its use as a scale inhibitor. In particular, the present disclosure relates to a polymer-polymer complex comprising (i) a copolymer comprising styrene sulfonic acid units and maleic acid units, and (ii) a polyaniline. This polymer-polymer complex is useful as a scale inhibitor, for sulphide scale and common scales like CaCO₃ and BaSO₄ and can therefore be used in the production of oil and gas.

### Background art

Fluids in oil production are composed of oil, gas and water. Reservoir waters can be waters that are very salty containing many elements. In particular, at high temperature, production waters can contain elements such as iron, zinc or lead, coming from the rocks with which the reservoir waters have been in contact for millions of years. When the gas associated with the production contains sulphides such as hydrogen sulphide, iron, zinc and/or lead sulphides can then be formed. These salts can be deposited in the immediate vicinity of the reservoir or in the production installations such as in the tubing. To remove them, it is necessary to clean the equipment on a regular basis, which has a negative effect on productivity.

A solution for removing these deposits consists in carrying out acid washings. In addition to their short duration of action, these treatments however are not without risk for man and the equipment, in particular in conditions of high pressure and of high temperature.

In order to overcome this problem, it is possible to inhibit the formation of the deposits by injecting scale inhibitors continuously, at the bottom of the well, when the installations are in place. The injection of the scale inhibitor can also be carried out using an injection technique called "squeeze". This technique consists in injecting a large quantity of product into the oil reservoir while production is stopped. The scale inhibitor injected into the reservoir must be absorbed by the rock during the injection and be released progressively when production resumes, to prevent the formation of deposits over a long period of time, during the production of reservoir waters.

Among the solutions proposed in prior art for inhibiting the formation of sulphide deposits, it has been suggested to add to the drilling fluid injected into the well an inhibiting agent able to prevent the formation of sulphide crystals, to prevent their growth or to disperse them. As such, a polymer of low molecular weight, which is a homo- or copolymer of vinyl sulphonate, was studied by M.M. JORDAN et al. in document SPE 64427 presented at the SPE Asia Pacific Conference in Brisbane (Australia), on 16 October 2000. Other inhibitors have been proposed in documents US-7,159,655 and US-7,398,824. These are respectively (a) acrylamide, quaternary ammonium and possibly acrylate copolymers, and (b) acrylamide, diallyldimethylammonium salt and possibly acrylate copolymers, which are introduced into a carrier fluid or into the brine. It is indicated that these polymers are more soluble, in high-density brines, than polymers made from acrylamidomethylpropane sulphonic acid, maleic acid and acrylic acid. Document GB-2 448 442 reports the introduction of the same type of polymer into a fracturing fluid. Document US-5,171,459 suggests the use of alkyldiphenylether sulphonates. It has been shown that these compounds disperse the sulphide deposits better than other sulphide polymers such as a poly(vinyl sulphonate) and a vinylsulphonate / styrene / maleic anhydrous copolymer.

It was however observed that the known inhibitors of sulphide deposits were not effective for use in conditions of high pressure and high temperature. The same applies to phosphonates which are known to break down at high temperature, with the degradation products of these compounds furthermore having very low solubility in the presence of alkaline earth metal cations, which substantially reduces their use and makes it even practically impossible in reservoir at more than 150°C.

A styrene sulphonic acid / anhydrous maleic copolymer has also been developed and shows better efficiency in conditions of high pressure and high temperature (WO2015092311A1). However, because of the interest in sulphide scale inhibitors, there is always a need to provide improved inhibitors that makes it possible to better inhibit or slow the formation of sulphide deposits, in particular zinc, iron and lead sulphides, which are stable at high temperature and high pressure. There is also a need to provide inhibitors that are absorbed by the rock during the injection and are released progressively when production resumes, to be compatible with "squeeze" treatment.

### Brief description of the invention

An aspect of the disclosure refers to a polymer-polymer complex comprising (i) a copolymer of styrene sulfonic acid and maleic acid and (ii) polyaniline.

The inventors unexpectedly found out that such polymer-polymer complex, or composite, has a good ability to inhibit or slow down the formation of sulphide deposits up to the conditions encountered in High Pressure/High Temperature (HP/HT) wells, with still very good properties in temperature ranges of the order of 200°C. They also found out that such polymer-polymer complex is also effective for inhibiting or slowing down the formation of CaCO₃ and BaSO₄ deposits.

Without wishing to be bound by this theory, the inventors hypothesize that the polyaniline enhances the retention of the sulphide scale inhibitor copolymer and improves its thermal stability, which makes it fit for its use in the squeeze treatment at HP/HT conditions.

Another aspect of the disclosure refers to a method for preparing the polymer-polymer complex of the present disclosure, wherein aniline is polymerized in presence of a copolymer of styrenesulfonic acid and maleic acid, using an acid and an oxidizing agent.

Another aspect of the disclosure refers to the use of the polymer-polymer complex of the present disclosure, for inhibiting or slowing down the formation of sulphide deposits, in particular of lead, iron and/or zinc sulphides, during the extraction of gas or oil.

Another aspect of the disclosure refers to the use of the polymer-polymer complex of the present disclosure, for inhibiting or slowing down the formation of CaCO₃ and BaSO₄ deposits, during the extraction of gas or oil.

Another aspect of the disclosure refers to a method for inhibiting or slowing the formation of sulphide deposits, in particular of lead, iron and/or zinc sulphides, during the extraction of gas or oil, comprising the injection, into a wellbore, a subterranean formation or a gas or oil well, of a fluid containing a polymer-polymer complex of the present disclosure.

Another aspect of the disclosure refers to a method for inhibiting or slowing the formation of CaCO₃ and/or BaSO₄ deposits, during the extraction of gas or oil, comprising the injection, into a wellbore, a subterranean formation or a gas or oil well, of a fluid containing a polymer-polymer complex of the present disclosure.

### Brief description of the drawings

Other features, details and advantages will be shown in the following detailed description and on the figures, on which:
**Fig. 1**

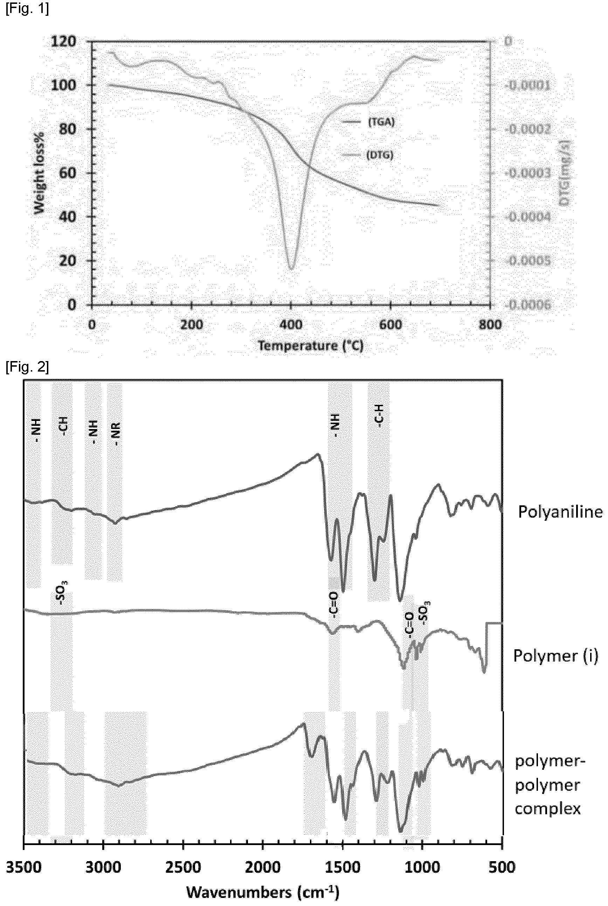

   [Fig. 1] shows a graph representing the thermal stability (TGA and DTG) of the polymer-polymer complex **1,** according to example 1.
**Fig 2****.**
   [Fig. 2] shows the IR spectra of polyaniline alone (upper spectrum), polymer (i) alone (middle spectrum), and polymer-polymer complex 1 (lower spectrum)
**Fig. 3**

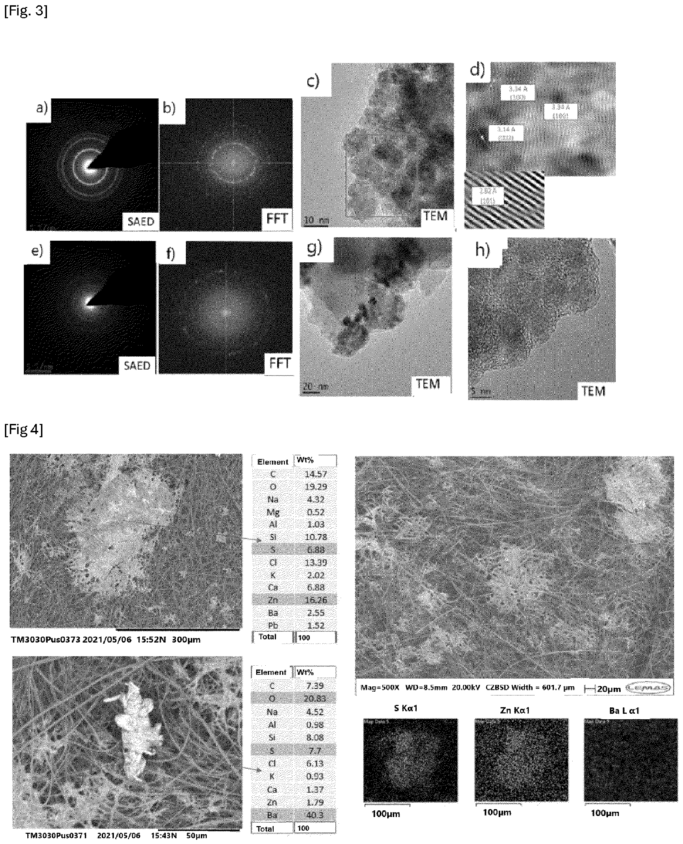

   [Fig. 3] shows the TEM and SEM analysis of aggregated ZnS crystals formed in bulk for blank sample (a-d) and secluded ZnS crystals wrapped in the polymer-polymer complex for inhibited sample (e-h), according to the static jar test of example 2. SAED = a and e, FFT = b and f and TEM nanographs = c, d, g and h.
**Fig. 4**
   [Fig. 4] shows the SEM and EDX results of the bulk test according to example 3.
**Fig. 5**

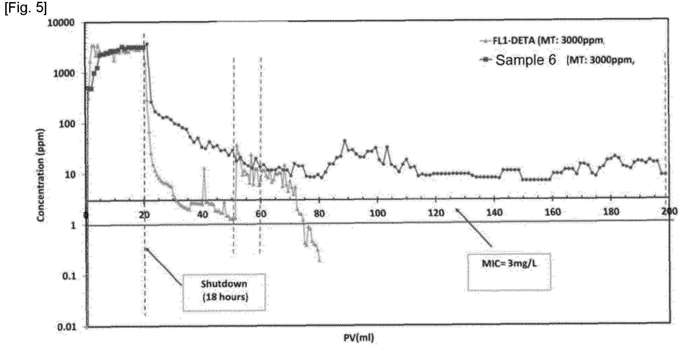

   [Fig. 5] shows the concentration of the polymer-polymer complex (sample 6) and FI1-DETA during the sand pack test according to example 4.

### Detailed description

### Polymer-polymer complex

An aspect of the disclosure refers to a polymer-polymer complex comprising (i) a copolymer of styrene sulfonic acid and maleic acid and (ii) polyaniline.

As used herein, a "polymer-polymer complex" or "composite" refers to a molecular entity formed from at least two different polymers that can be ionic or uncharged. According to an embodiment, the two polymers are not bound to each other via a covalent bond.

The ratio of aniline/copolymer can be between 0.06 and 2 wt/wt, preferably between 0.1 and 0.2

The copolymer (i) of styrene sulfonic acid and maleic acid can be of formula (I) 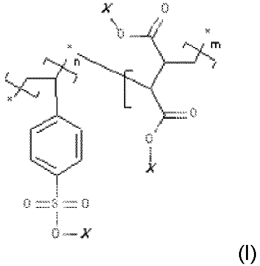
wherein X = a counterion or H, preferably X = Na or H, and
m/(m+n) = 0.1-0.9 and n/(m+n) = 0.9-0.1, preferably m/(m+n) = 0.25-0.75 and n/(m+n) = 0.75-0.25, and more preferentially m/(m+n) = 0.3-0.5 and n/(m+n) = 0.5-0.7.

According to a preferred embodiment, the copolymer (i) has an equimolar ratio of m and n, so m/(m+n) = n/(m+n) = 0.5.

This specific copolymer can be obtained according to conventional methods of radical polymerization in aqueous or hydroalcoholic means and at acidic pH. It is also commercially available from MERCK (CAS = 68037-40-1).

This copolymer can contain at least one other unit chemically separate from those mentioned hereinabove and which can for example have at most 20% mol and more preferably at most 10% mol, in relation to the total number of moles of monomeric units in said copolymer. This other unit can be chosen in particular from (meth)acrylamides, (meth)acrylic acid esters, vinyl acetate, styrene and vinyltoluene.

The copolymer (i) can have a molecular mass Mw between 10 kDa and 50 kDa, for example, the molecular mass Mw can be about 20 kDa.

X can be a counterion or H. The counterion can be an alkali cation, like Na⁺.

The polyaniline (ii) is an emeraldine salt polyaniline.

This polymer-polymer complex has been designed in such a way that the positive charges on the polyaniline (ii) stay active to create strong adsorption with sand particles, whilst the functional groups of copolymer (i) help with the solubility of the final complex.

The polymer-polymer complex can be of formula (II) 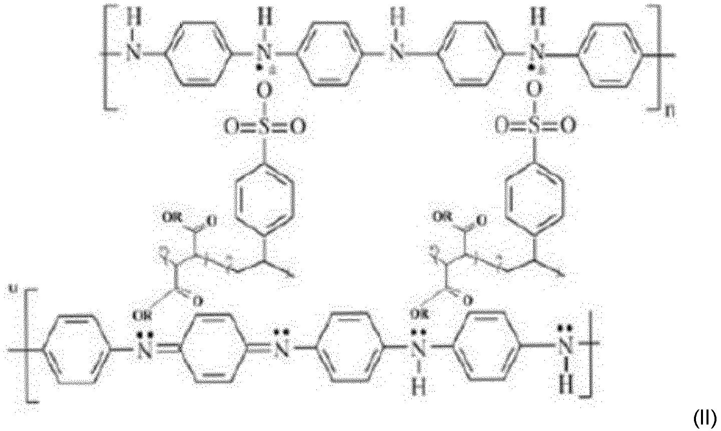 wherein R corresponds to X in the formula (I).

### Method for preparing the polymer-polymer complex

Another aspect of the disclosure refers to a method for preparing the polymer-polymer complex of the present disclosure, wherein aniline is polymerized in the presence of a copolymer solution of styrenesulfonic acid and maleic acid i.e.copolymer (i), using an acid and an oxidizing agent. Polyaniline is polymerized via oxidative polymerization in the presence of copolymer (i). so that when polymerized, it interacts with functional groups on copolymer (i) to form the polymer-polymer complex.

The concentration of the copolymer solution can be between 5 and 25% wt, preferably around 10%. As used herein, "about" means ±10%.

According to an embodiment, the ratio aniline/acid is comprised between 0,09 and 0,2 wt/mL, preferably between 0,095 and 0,15, the ratio aniline/oxidizing agent is comprised between 0,1 and 2 wt/wt, and the aniline/copolymer ratio is comprised between 0,06 and 2 wt/wt, preferably between 0.1 and 0.2.

According to an embodiment, the acid is HCl. The acid is required to radicalise aniline monomers. The acid used can be a solution of acid at a concentration comprised between 0.05 and 5M, preferably the concentration is 1M.

According to an embodiment, the oxidizing agent is ammonium persulfate.

According to an embodiment, the method comprises the following steps:
- aniline is dissolved in an acidic solution,
- the oxidizing agent is added, and
- a solution comprising copolymer (i) is added, preferably a 10% wt solution.

Another aspect of the disclosure refers to a polymer-polymer complex obtainable by the method disclosed herein.

### Use of the polymer-polymer complex

Due to its good thermal resistance, the polymer-polymer complex according to the disclosure can be used in particular in oil wells operating at high pressure (HP), i.e. at more than 10 MPa, for example from 20 to 150 MPa, and at high temperature (HT), i.e. from 150 to 250°C, for example from 200 to 230°C. The polymer-polymer complex according to the disclosure can be used in oil wells operating at high salinity (HS).

This polymer-polymer complex can be injected into the well in the form of an additive in a drilling fluid. This drilling fluid can contain from 1 to 10 ppm of the polymer-polymer complex.

Alternatively, the polymer-polymer complex can be injected into the well as "squeeze", i.e. according to a method that consists in rinsing the well with sea water, then in injecting into the well a fluid containing this polymer-polymer complex and in introducing again sea water into the well in order to disperse the polymer in the reservoir and allow it to be adsorbed on the underground rock formations. During this treatment, the operations of extracting the oil are interrupted and, when they are resumed, the polymer will be released progressively from the rock formations in order to prevent or slow the formation of sulphide deposits, and/or prevent or slow the formation of CaCO₃ and/or BaSO₄ deposits. In this alternative, the fluid injected can contain about 10% by weight of the polymer-polymer complex. The polymer-polymer complex has an improved "squeeze" lifetime, as it is absorbed by the rock during the injection and is then released progressively, which makes it suitable for this "squeeze" treatment.

In any case, the fluid conveying the polymer-polymer complex according to the present disclosure can furthermore comprise other additives such as corrosion inhibitors, paraffin inhibitors, surfactants or demulsifiers, dispersants, in particular dispersants of asphaltene, foaming agents or anti-foaming agents, biocidal agents, oxygen collectors, chelating agents such as EDTA and DTPA, and mixtures thereof.

According to an advantageous embodiment of the invention, this fluid furthermore contains at least one polymer bearing amine functions, such as the polyamines mentioned hereinabove, in particular DETA or PEI, silicone polymers bearing amine functions, and mixtures thereof.

Another aspect of the disclosure relates to the use of the polymer-polymer complex of the disclosure, for inhibiting or slowing down the formation of sulphide deposits, in particular of lead, iron and/or zinc sulphides, during the extraction of gas or oil.

Another aspect of the disclosure relates to the use of the polymer-polymer complex of the disclosure, for inhibiting or slowing down the formation of CaCO₃, BaSO₄ and/or CaSO₄ deposits, during the extraction of gas or oil.

Another aspect of the disclosure relates to the use of the polymer-polymer complex of the disclosure, for inhibiting or slowing down the formation of:
- sulphide deposits, in particular of lead, iron and/or zinc sulphides; and
- CaCO₃ and BaSO₄ deposits,
during the extraction of gas or oil.

Another aspect of the disclosure relates to a method for inhibiting or slowing the formation of sulphide deposits, in particular of lead, iron and/or zinc sulphides, during the extraction of gas or oil, comprising the injection, into a wellbore, a subterranean formation or a gas or oil well, of a fluid containing a polymer-polymer complex of the disclosure.

Another aspect of the disclosure refers to a method for inhibiting or slowing the formation of CaCO₃ and BaSO₄ deposits, during the extraction of gas or oil, comprising the injection, into a wellbore, a subterranean formation or a gas or oil well, of a fluid containing a polymer-polymer complex of the present disclosure.

Another aspect of the disclosure relates to a method for inhibiting or slowing the formation of:
- sulphide deposits, in particular of lead, iron and/or zinc sulphides; and
- CaCO₃ and BaSO₄ deposits,
during the extraction of gas or oil, comprising the injection, into a wellbore, a subterranean formation or a gas or oil well, of a fluid containing a polymer-polymer complex of the disclosure.

According to an embodiment, the fluid is injected into an oil well operating at more than 10 MPa, for example from 20 to 150 MPa, and at 150 to 250°C, for example from 200 to 230°C.

### Examples

### Example 1 : Synthesis of the polymer-polymer complex 1

Step 1: Poly(4-styrenesulfonic acid-co-maleic acid) sodium salt (polymer (i)) was purchased from Sigma Aldrich (CAS: 68037-40-1; [CH₂CH (C₆H₄SO₃R)]ₓ[CH(CO₂R)CH(CO₂R)]_{y}, R=H or Na). The polymer has a molar mass of about 20 kDa and an equimolar ratio of styrene sulphonic acid and maleic acid functions. 10 g of the polymer was weighed in a 100 mL bottle. The mass is then adjusted to 100 grams by adding ultra-pure water. The pH of 7.5 is adjusted to 4.5 by successive addition of 6M hydrochloric acid. After setting the pH, 10.96 g of NaCl was added to the polymer mixture to increase the solution conductivity to 82258 uS/cm.

Step 2: To produce polymer-polymer complex 1, polymerisation of aniline in the presence of polymer (i) is required. This will allow the conjugation of the two polymers and the growth of polyaniline chains on the structure of the polymer (i) to form the polymer-polymer complex instead of two independent structures. In a 100 mL bottle container, 6.4 mmol aniline was dissolved in 5 mL of 1 M HCl solution and stirred for 10 minutes. This was followed by the addition of 15ml deionized water (DI) water and sufficient mixing. 1.6 mmol of ammonium persulfate (APS) was gradually added over 5 minutes to the stirring solution. After the blend colour changed to blue, 5.96g of the solution prepared in step 1 was weighed and mixed with 15 mL of DI water in a separate container. The diluted mixture was then added to the main mixture and the container was rinsed with an extra 5mL of DI water. The main blend was covered with a parafilm and continued stirring at moderate speed overnight at room temperature. The final emerald green polymer-polymer complex 1 was centrifuged and rinsed with DI water 6 times to remove the non-reacted materials or that the top solution became clear green rather than brownish tint.

### Characterisation of the polymer-polymer complex:

Thermal stability at elevated temperatures was evaluated using TGA. Corresponding thermal gravimetric spectra and differential thermal gravimetric analysis (TGA/DTG) are shown in Figure 1. The analysis were run with Toledo TGA/DSC 3 manufactured by Mettler. The results show that the polymer-polymer complex **1** has the required thermal stability up to 385°C and is a perfect candidate for squeeze treatment application at high temperatures.

The polymer-polymer complex was characterized by FTIR analysis. The obtained spectra for polyaniline alone, copolymer (i), and the polymer-polymer complex are shown in Fig.2. The results show that polymer-polymer complex comprises peaks corresponding to -SO₃⁻ and -C=O functions, and that there is a shift in the peaks (like the CO peak), showing the hydrogen bonding of the -SO₃⁻and -COOH groups with the polyaniline polymer. These results show that the polymer-polymer complex 1 is formed, as there are interactions between copolymer (i) and the polyaniline.

### Study of the impact of the different ratios

Different ratios of aniline/initiator (oxidizer), aniline/polymer (i) and aniline/HCl were tested to produce the polymer-polymer complex. The results are shown in Table 1. They show that the ratios of starting materials are a crucial parameter to obtain a polymer-polymer complex that is soluble in water and efficient as a scale inhibitor. Other ratios lead to insolubility of the polymeric inhibitor in water, instability of the final product (short shelf life), incompatibility of the inhibitor with the formation brine or dysfunctionality as a scale inhibitor. This was confirmed through FTIR analysis and scale testing as mentioned herein.

**Table 1**

| Sample | Aniline/APS (monomer/oxidiser) (wt/wt) | Aniline/Polymer (i) (monomer ratios) (wt/wt) | Aniline/ HCl(1M) (Monomer/ Acid ratio) (wt/ml) | Comments |
|---|---|---|---|---|
| 1 | 2,24 | 0,2 | 0,12 | Inefficient - Not acting as antiscalant for sulphide scales |
| 2 | 1,63 | 0,2 | 0,12 | Efficent |
| 3 | 1,63 | 0,2 | 0,024 | insoluble in water |
| 4 | 1,63 | 0,2 | 0,03 | insoluble in water |
| 5 | 1,63 | 0,2 | 0,09 | insoluble in water |
| 6 | 1,63 | 0,1 | 0,12 | Efficent |
| 7 | 1,63 | 0,1 | 0,099 | Efficent |
| 8 | 1,63 | 0,05 | 0,12 | Incompatible with brine |
| 9 | 1,63 | 0,04 | 0,12 | Incompatible with brine |
| 10 | 1,63 | 0,02 | 0,12 | Incompatible with brine |
| 11 | 1,63 | 0,01 | 0,12 | Incompatible with brine |

The results show that only samples 2, 6 and 7 are efficient as scale inhibitors. When the aniline/oxidiser ratio is too high, the polymer-polymer complex is not active as an inhibitor, when it is too low, polyaniline is not formed. When the aniline/ acid ratio or the aniline/polymer (i) ratio is too low, the polymer-polymer complex is not soluble in water or incompatible with brine.

### Example 2: test of polymer-polymer complex 1 on sulphide scale - static jar test

For an effective scale inhibitor, the chemical needs to be stable to thermal degradation under the wells downhole condition and also be compatible with brine. Brine compatibility is a major issue of concern since premature precipitation of inhibitor complexes during injection may lead to the formation of pseudo-scale with associated fines plugging. The scale inhibitor should be fully compatible with brine i.e without any precipitate formation.

In static inhibitor adsorption tests, under a known set of test conditions, the equilibrium is established between the scale inhibitor solution and crushed reservoir core from the formation into which the chemical is to be squeezed. Solutions of samples 6 and 7 were prepared by diluting down the pure polymer-polymer complex with the brine at 10mg/mL, with 100 mg/L of H₂S.

The brine composition is shown in the table below

**Table 2**

| Ion | Concentration (mg/L) |
|---|---|
| Na⁺ | 29,5 |
| Mg²⁺ | 255 |
| Ca²⁺ | 3,6 |
| Zn²⁺ | 100 |
| Pb²⁺ | 0 |
| Cl⁻ | 100 |
| H2Seq | 5 |
| Total dissolved salt | 90,6 |

Solutions were poured in separate beakers and the initial pH was measured for each sample. The beakers were covered and left still overnight at room temperature, 23°C. After 24 hours, samples were filtered with 0.4 micron syringe filters and analysed with UV-vis technique or compared with a fresh sample after the pH was recorded. The top solution (supernatant) of each beaker was emptied and replaced with a fresh 80 ml of brine. In this way the formed precipitation in each beaker should stay intact and remained in the container. As the added fresh brine is free of polymer-polymer complex inhibitor, the latter will be undersaturated in the system and the desorption from the adsorbate should take place. The aim of this experiment is to evaluate the amount of desorption from the already adsorbed/precipitated scale inhibitor of the previous experiment i.e. adsorption/precipitation.

The results after 24h are shown in the table below

**Table 3**

| Sample | Concentration (mg/L) | Zn²⁺ (mg/L) | pHinitial | pH final |
|---|---|---|---|---|
| Blank | 0 | 4±0.2 | 5.5 | 4.02 |
| 6 | 10 | 67.8±0.5 | 5.5 | 3.43 |
| 7 | 10 | 51.4±0.5 | 5.5 | 4.23 |

These results show that the polymer-polymer complex is able to significantly reduce the consumption of Zn²⁺. and therefore can be effective as a sulphide scale inhibitor.

It was also corroborated by TEM (transmission electron microscopy) and SEM (scanning electron microscopy) analysis performed on the samples (cf. Figure 3). This figure shows that the nucleation of Zn scale is disturbed when the polymer-polymer complex is used, as the surface of the ZnS crystals are covered with the polymer-polymer complex. The amorphous FFT signal from inhibited sample shows the surface of the ZnS crystals covered with the polymer (Figure 3f).

### Example 3: test of polymer-polymer complex 1 on CaCO₃ and BaSO₄ - Bulk test

In case of formation water containing high concentrations of Ca2+, the scale inhibitor is considered compatible with the formation water if turbidity is not observed within 24 hours which in this case concentration of Ca2+ in the formation water is the main factor on the inhibitor efficiency.

The experiments were performed under the same setup, yet with no crushed reservoir core present, and a different brine composition was used, as shown in the table below

**Table 4**

| Ion | Concentration (mg/L) |
|---|---|
| Na⁺ | 84 |
| K⁺ | 10 |
| Mg²⁺ | 981 |
| Ca²⁺ | 18 |
| Ba²⁺ | 1020 |
| Sr²⁺ | 02 |
| Fe²⁺ | 421 |
| Cl⁻ | 175 |
| SO₄²⁻ | 24 |
| HCO₃⁻ | 222 |
| Zn²⁺ | ~100-200 |
| Pb²⁺ | ~1-10 |
| Total dissolved salt | 292 |
| *m*NaCl_{eq} | 5 |
| H2S | ~34 |

The results show that the polymer-polymer complex inhibits the formation and growth of CaCO₃ and BaSO₄ as there were no/minimal traces of these scales found on the filter papers after the static tests at 10mg/L concentration.

SEM and EDX (Energy-Dispersive Xray Spectroscopy) analysis were also performed, and the results are shown in Figure 4. This Figure shows the complete inhibition of BaSO₄ crystals.

These results show that the polymer-polymer complex according to the present divulgation is not only efficient for sulphide scale but also for common scales like CaCO₃ and BaSO_{4.}

### Example 4 - Sand pack test

This test is performed with sample 6 and with a comparative inhibitor based on a copolymer (i) functionalized with diethylenetriamine as disclosed in WO2015092311A1 (FI1-DETA).

The sand pack is designed to carry low pressure flooding experiments. This test helps to evaluate inhibitor's retention on sand particles, and the "squeeze" lifetime of the inhibitor. The main components are a sand column, a pump to flush the brine through the porous media and a sample collector. The fluids injected are flushed through the porous pack using a peristaltic pump (Ismatec ISM596), and the fluids that exit are collected in a fraction collector that rotates by regular time intervals. The concentration of the inhibitor at the outlet is analysed by UV-vis spectrophotometer. Preconditioning: The preconditioning is done at room temperature with 1 % NaCl solution. Flush with brine (no tracer / pH= experimental pH) at 150 ml/hr for an hour and continue at 20 ml/hr for 5 hours to precondition the sand pack column. The sand pack column is now ready for main treatment.

Main treatment (MT): The main treatment consists of two main stages:
- Lithium tracer that is 20-50 ppm of standard lithium solution for AAS and ICP application which is blended with seawater
- The treatment which is usually 3000-5000 ppm inhibitor diluted in seawater.

Both stages are run at room temperature with 20 ml/hr flow rate for up to 20 PV. Samples are analysed with AAS for the lithium and UV-vis for the inhibitor concentration.

For the Shut-in stage of the sand pack column, the flow will be stopped after ≈20 pore volumes (20 PV) by closing valves.

Post-flush treatment (PF): The post-flush treatment is performed at the same flow rate as the main treatment, i.e. 20 ml/hour with seawater until the effluent concentration drops below the minimum inhibitor concentration (MIC).

The experimental detail is shown in the table below.

| Number | Description | Flow rate (ml/hour) | PV (mL) |
|---|---|---|---|
| 0 | 1% NaCl (preconditioning) | 150 | 10 |
| 1 | Lithium tracer 50 ppm (MT₁) | 20 | 20 |
| 2 | Inhibitor 3000 ppm (MT₂) | 20 | 20 |
| 3 | Shutdown 18 hours | 0 | 0 |
| 4 | Seawater (PF₁) | 20 | 30 |
| 5 | 1% NaCl (PF₂) | 20 | 10 |
| 67 | Shutdown 8 hours | 0 | 0 |
| | Seawater | 20 | 105 |

This sand pack test with the presence of severe CaCO₃ and BaSO₄ scaling brine, also showed no blockage of the pores for 200 hours. The results obtained are shown in Figure 5. This figure shows that the polymer-polymer complex has a higher adsorption in the injection stage, and a longer return tail than the modified copolymer (i) alone, thus indicating an improved "squeeze" lifetime.

## Claims

1. A polymer-polymer complex comprising (i) a copolymer of styrenesulfonic acid and maleic acid and (ii) polyaniline.

2. The polymer-polymer complex according to claim 1, wherein the copolymer (i) is of formula (I) 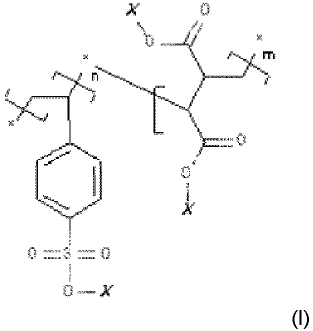 wherein
X is Na or H, and
m/(m+n) = 0.1-0.9 and n/(m+n) = 0.9-0.1, preferably m/(m+n) = 0.25-0.75 and n/(m+n) = 0.75-0.25, and more preferentially m/(m+n) = 0.3-0.5 and n/(m+n) = 0.5-0.7.

3. The polymer-polymer complex according to claim 1 or 2, wherein the polyaniline (ii) is an emeraldine salt polyaniline.

4. The polymer-polymer complex according to claim according to any of the preceding claims, wherein said polymer-polymer complex is of formula (II)

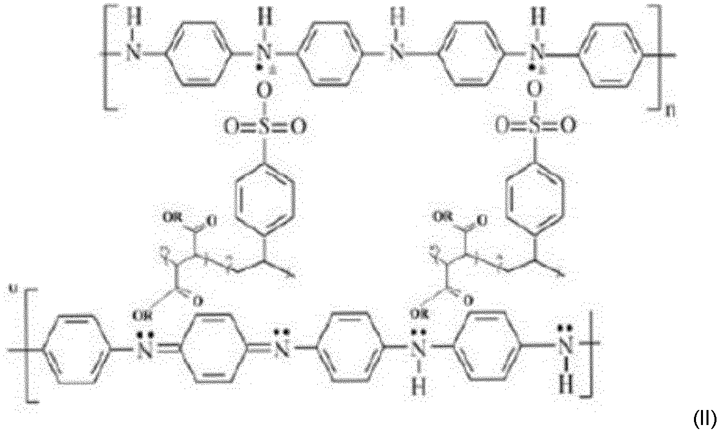

5. Method for preparing the polymer-polymer complex according to any of the preceding claims, wherein aniline is polymerized in presence of a copolymer of styrene sulfonic acid and maleic acid using an acid and an oxidizing agent.

6. Method according to the preceding claim, wherein the ratio aniline/acid is comprised between 0.09 and 0.2 wt/mL, the ratio aniline/oxidizing agent is comprised between 0.1 and 2 wt/wt, and the aniline/copolymer ratio is comprised between 0,06 and 2 wt/wt, preferably between 0.1 and 0.2.

7. Method according to claim 5 or 6, wherein the acid is selected from HCl,

8. Method according to any of claims 5 to 7, wherein the oxidizing agent is selected from ammonium persulfate.

9. Polymer-polymer complex obtainable by the method according to any of claim 5 to 8.

10. Use of the polymer-polymer complex according to any of claims 1 to 4, for inhibiting or slowing down the formation of sulphide deposits, in particular of lead, iron and/or zinc sulphides, during the extraction of gas or oil.

11. Use of the polymer-polymer complex according to any of claims 1 to 4, for inhibiting or slowing down the formation of CaCO₃ and BaSO₄ deposits, during the extraction of gas or oil.

12. Method for inhibiting or slowing the formation of sulphide deposits, in particular of lead, iron and/or zinc sulphides, during the extraction of gas or oil, comprising the injection, into a wellbore, a subterranean formation or a gas or oil well, of a fluid containing a polymer-polymer complex according to any of claims 1 to 4.

13. Method for inhibiting or slowing the formation CaCO₃ and BaSO₄ deposits deposits, during the extraction of gas or oil, comprising the injection, into a wellbore, a subterranean formation or a gas or oil well, of a fluid containing a polymer-polymer complex according to any of claims1 to 4

14. Method according to claims 12 to 13, wherein the fluid is injected into an oil well operating at more than 10 MPa, for example from 20 to 150 MPa, and at 150 to 250°C, for example from 200 to 230°C.
